# EUROPÄISCHE PATENTSCHRIFT

(11) **EP 0 666 293 B1**
(45) Veröffentlichungstag und Bekanntmachung des Hinweises auf die Patenterteilung: **28.04.1999**
(21) Anmeldenummer: 95100893.7
(22) Anmeldetag: 24.01.1995
(51) Int. Cl.: C09D 11/10

(54) **Druckfarben auf Mineralölbasis und deren Verwendung für das Bogenoffset-Druckverfahren**
Printing inks based on mineral oil and their use in offset printing
Encres d'imprimerie à base d'huile minérale et leur utilisation en impression offset

(30) Priorität: 04.02.1994 DE 4403481
(43) Veröffentlichungstag der Anmeldung: 09.08.1995
(73) Patentinhaber: BASF Coatings Aktiengesellschaft, 48165 Münster (DE)
(72) Erfinder: Klemm, Karl-Wilhelm, Dr., D-70597 Stuttgart (DE); Fries, Werner, Dr., D-67459 Böhl-Iggelheim (DE); Kappel, Matthias, B-1180 Brüssel (BE)
(74) Vertreter: Karau, Wolfgang, Dr.

(56) Entgegenhaltungen:
- EP-A- 0 361 103
- WO-A-86/01527
- DE-A- 3 243 531

## Beschreibung

Die vorliegende Erfindung betrifft Druckfarben auf Mineralölbasis, enthaltend als Bindemittel eine Mischung aus
A) 10 bis 50 Gew.-% eines Alkydharzes mit einer Hydroxylzahl von 40 bis 260 und einer Säurezahl von 20 bis 70 und
B) 50 bis 90 Gew.-% eines Umsetzungsproduktes aus Kolophonium und einem Phenol-Formaldehyd-Kondensationsprodukt.

Weiterhin betrifft die Erfindung die Verwendung solcher Druckfarben für das Bogenoffset-Druckverfahren.

Aus der EP-A 228 372 sind schnellwegschlagende Bogenoffset-Druckfarben bekannt, welche als Bindemittel phenolharzmodifiziertes Kolophonium und ein Alkydharz aus einer ungesättigten Fettsäure, einem Polyol und einer Dicarbonsäure enthalten, welches eine Säurezahl unter 11 aufweist. Solche Druckfarben neigen jedoch zum Emulgieren mit dem im Offset-Druckverfahren verwendeten Feuchtmittel und vermögen hinsichtlich des Wegschlagverhaltens noch nicht völlig zu befriedigen. Aufgabe der Erfindung war es, verbesserte Druckfarben für das Bogenoffset-Druckverfahren zu finden.

Demgemäß wurden die eingangs definierten Druckfarben gefunden.

Zu den Aufbaukomponenten der Druckfarben ist folgendes auszufuhren.

Die Alkydharzkomponente A) wird in Mengen von 10 bis 50 Gew.-%, bezogen auf die gesamte Bindemittelmenge, eingesetzt. Als Alkydharze kommen solche mit einer Säurezahl von 20 bis 70 mg, vorzugsweise 20 bis 50 mg KOH/g Harz in Betracht. Vorzugsweise werden Umsetzungsprodukte erhältlich aus
a₁) einer ungesättigten Fettsäure mit 6 bis 20 C-Atomen oder einem Gemisch derartiger Säuren oder deren Triglyceriden,
a₂) einem oder mehrerer Polyole mit 3 bis 8 C-Atomen,
a₃) einer Dicarbonsäure mit 4 bis 20 C-Atomen und
a₄) einem Dicarbonsäureanhydrid mit 4 bis 20 C-Atomen
als Komponenten A) verwendet.

Als ungesättigte Fettsäuren a₁) kommen vor allem mehrfach ungesättigte Fettsäuren, wie sie in Form ihrer Triglyceride in natürlichen Ölen vorkommen, in Betracht, beispielsweise Linolenfettsäure, Elastearinsäure oder Octadecadiensäure.

Es können auch statt der reinen Fettsäuren natürliche Öle, welche ungesättigte Fettsäuren enthalten, eingesetzt werden, beispielsweise Leinöl, Sojaöl oder dehydratisiertes Rizinusöl.

Als Polyole a₂) kommen vor allem Polyole mit 3 bis 8 C-Atomen in Betracht wie beispielsweise Glycerin, Pentaerythrit, Trimethylolpropan, Sorbitol oder Dipentaerythrit. Geeignete Dicarbonsäuren a₃) mit 4 bis 20 C-Atomen sind vor allem aromatische Dicarbonsäuren wie Phtalsäure oder Isophtalsäure, sowie Terephtalsäure oder aliphatische Dicarbonsäuren wie Maleinsäure, Fumarsäure oder Adipinsäure. Geeignete Verbindungen a₄) sind Dicarbonsäureanhydride der oben genannten Dicarbonsäuren.

Die Herstellung der Alkydharze A) erfolgt vorzugsweise so, daß zunächst die Verbindungen (a₁), (a₂) und (a₃) miteinander zu einem Umsetzungsprodukt mit einer Säurezahl zwischen 10 und 15 mg KOH/g Substanz bei Temperaturen im Bereich von 200 bis 240°C umgesetzt werden. Üblicherweise kann die Umsetzung in Abwesenheit eines Lösungsmittels durchgeführt werden, gewünschtenfalls aber auch in Gegenwart von Mineralöl als Lösungsmittel. Das so erhaltene Umsetzungsprodukt wird anschließend bei Temperaturen im Bereich von 120 bis 180°C, vorzugsweise 150 - 170°C, mit dem Dicarbonsäureanhydrid (a4) umgesetzt, wobei diese Umsetzung vorzugsweise in Gegenwart von Mineralöl durchgeführt wird.

Die Mengenverhältnisse der Einzelkomponenten (a₁) bis (a₂) untereinander werden so gewählt, daß die Maßgaben bezüglich der Säurezahl und der Hydroxylzahl erfüllt werden, wobei dem Fachmann bekannt ist, wie er diese Mengenverhältnisse entsprechend einstellen kann.

Als Komponenten B) werden für Druckfarben übliche Umsetzungsprodukte aus Kolophonium und Phenol-Formaldehyd-Kondensationsprodukten eingesetzt. Solche Produkte sind handelsüblich und ihre Herstellung ist dem Fachmann allgemein bekannt (Vgl. "The Printing Ink Manual", 4th Edition, S 201 f., Van Nostrand Reinhold, London, 1988).

Die erfindungsgemäßen Druckfarben können neben der Bindemittelmischung der Komponenten A) und B) zusätzlich noch Pigmente sowie übliche Hilfsmittel wie Gleitmittel, Verdickungsmittel, Thixotropiermittel oder Siccative wie Kobalt- oder Mangansalze enthalten.

Als Lösungsmittel werden Mineralöle verwendet, beispielsweise aliphatische und/oder aromatische Kohlenwasserstoffe mit einem Siedebereich von 150 bis 300°C.

Zur Herstellung der Druckfarben werden die einzelnen Bestandteile mit Hilfe einer geeigneten Dispergiervorrichtung wie beispielsweise einer Dreiwalze oder einer Sand- oder Kugelmühle dispergiert.

Die erfindungsgemäßen Druckfarben eignen sich vor allem für das Bogenoffset-Druckverfahren, bei dem die Druckfarbe zunächst auf ein Gummituch und von dort auf das zu bedruckende Substrat gebracht wird.

Die erfindungsgemäßen Druckfarben weisen ein verbessertes Wegschlagverhalten auf sowie eine geringere Neigung zum Emulgieren mit dem Feuchtwasser.

### Beispiel 1

Eine Mischung aus 842 g Ricinenfettsäure, 397 g Pentaerythrit und 387 g Isophtalsäure wurde unter einer Schutzgasatmosphäre aus Stickstoff auf 240°C erhitzt und solange bei dieser Temperatur gehalten bis das Reaktionsgemisch eine klare Lösung darstellt. Anschließend wurde das Reaktionsgemisch solange bei 210°C gehalten, bis die Säurezahl 12 mg KOH/g betrug. Dann wurden 990 g Mineralöl (Siedebereich 280 - 310°C) zugegeben, auf 150°C abgekühlt und 128 g Phtalsäureanhydrid zugegeben. Die Temperatur des Reaktionsgemisches wurde noch 90 min. bei 150°C gehalten und anschließend weitere 460 g des Mineralöls zugegeben. Das so erhaltene Harz wies eine Hydroxylzahl von 121 mg KOH/g Harz und eine Säurezahl von 40 mg KOH/g Harz auf.

Mit der so erhaltenen Alkydharzlösung wurde ein Druckfarbenbindemittel folgender Zusammensetzung hergestellt:

| | |
|---|---|
| 360 g | eines handelsüblichen phenolharzmodifizierten Kolophoniums |
| | (Albertol® KP 648 der Fa. Hoechst) |
| 270 g | Alkydharz |
| 50 g | Dinonyladipat |
| 320 g | Mineralöl |

Die Harzkomponenten wurde bei 180°C unter Rühren in dem Mineralöl gelöst. Die Bindemittelmischung wurde in einer Dreiwalze zu einer Druckfarbe folgender Zusammensetzung verarbeitet:

| | |
|---|---|
| 15 g | Phthalocyaninblau |
| 3 g | Calciumcarbonat |
| 1 g | Polyethylenwachs |
| 72 g | Bindemittelmischung |
| 7 g | Mineralöl |
| 2 g | Manganoctoat (6 Gew.-%ige Lösung in Mineralöl) |

### Beispiel 2

Analog Beispiel 1 wurde unter Verwendung der folgenden Einsatzstoffe ein Alkydharz hergestellt:

| | |
|---|---|
| 928 g | Ricinenfettsäure |
| 326 g | Pentaerythrit |
| 108 g | Trimethylolpropan |
| 427 g | Isophthalsäure |
| 1092 g | Mineralöl |
| 137 g | Phthalsäureanhydrid |
| 500 g | Mineralöl |

Das so erhaltene Alhydharz wies eine Hydroxylzahl von 121 mg KOH/g und eine Säurezahl von 40 mg KOH/g auf.

Mit dieser Harzlösung wurde eine Bindemittelmischung folgender Zusammensetzung hergestellt:

| | |
|---|---|
| 360 g | phenolharzmodifiziertes Kolophonium |
| 270 g | Alkydharz |
| 50 g | Dinonyladipat |
| 320 g | Mineralöl |

Die Bindemittelmischung wurde zu einer Druckfarbe folgender Zusammensetzung verarbeitet:

| | |
|---|---|
| 15 g | Phthalocyaninblau |
| 3 g | Calciumcarbonat |
| 1 g | Polyethylenwachs |
| 71 g | Bindemittel |
| 8 g | Mineralöl |
| 2 g | Manganoctoat (6 Gew.-%ige Lösung in Mineralöl) |

Vergleichsbeispiel (gemäß EP-A 0 228 372)

Eine Mischung aus 1159 g Ricinenfettsäure, 546 g Pentaerythrit und 534 g Isophtalsäure wurde unter einer Schutzgasatmosphäre auf 240°C und bei dieser Temperatur gehalten bis das Reaktionsgemisch eine klare Lösung war. Anschließend wurde solange auf 210°C erhitzt, bis die Säurezahl 10 erreicht war und dann mit 1366 g Mineralöl versetzt. Das Harz wies eine Hydroxylzahl von 160 mg KOH/g auf.

Unter Verwendung dieser Harzlösung wurde ein Druckfarbenbindemittel folgender Zusammensetzung hergestellt:

| | |
|---|---|
| 340 g | phenolharzmodifiziertes Kolophonium |
| 230 g | Alkydharz |
| 50 g | Dinonyladipat |
| 380 g | Mineralöl |

Mit dieser Bindemittelmischung wurde eine Druckfarbe folgender Zusammensetzung hergestellt:

| | |
|---|---|
| 15 g | Phthalocyaninblau |
| 3 g | Calciumcarbonat |
| 1 g | Polyethylenwachs |
| 74 g | Bindemittelmischung |
| 5 g | Mineralöl |
| 2 g | Manganoctoat |

Das Wegschlagverhalten der in den Beispielen 1 und 2 hergestellten Druckfarben wurde mit dem der Druckfarbe laut Vergleichsbeispiel verglichen.

Das Wegschlagverhalten wurde gemessen, indem in Abhängigkeit von der Zeit die Farbmenge, die von einem bedruckten Substrat auf einem Konterbedruckstoff übertragen wurde, densitometrisch bestimmt wurde. Dabei wurden folgende optische Farbdichten gemessen:

| optische Farbdichte nach | | | | |
|---|---|---|---|---|
| | 5 s | 15 s | 30 s | 60 s |
| Beispiel 1 | 0,40 | 0,26 | 0,05 | 0,01 |
| Beispiel 2 | 0,26 | 0,12 | 0,04 | 0,01 |
| Vergleichsbeispiel | 0,71 | 0,12 | 0,08 | 0,01 |

Es zeigt sich, daß die erfindungsgemäßen Druckfarben schneller wegschlagen als die des Vergleichsbeispieles.

Außerdem zeigten die erfindungsgemäßen Druckfarben auf der Druckmaschine eine geringere Neigung zum Emulgieren.

## Patentansprüche

1. Druckfarben auf Mineralölbasis, enthaltend als Bindemittel eine Mischung aus
A) 10 bis 50 Gew.-% eines Alkydharzes mit einer Hydroxylzahl von 40 bis 260 mg KOH/g Harz und einer Säurezahl von 20 bis 70 mg KOH/g Harz, welches erhalten wird durch Umsetzung von
(a₁) einer ungesättigten Fettsäure mit 6 bis 20 C-Atomen oder einem Gemisch derartiger Säuren oder deren Triglyceriden,
(a₂) einem oder mehrerer Polyole mit 3 bis 8 C-Atomen und
(a₃) einer Dicarbonsäure mit 4 bis 20 C-Atomen
zu einem Umsetzungsprodukt mit einer Säurezahl von 10 bis 15 mg KOH/g Substanz, und
anschließende Umsetzung bei 120 bis 180°C mit
(a₄) einem Dicarbonsäureanhydrid mit 4 bis 20 C-Atomen,
und
B) 50 bis 90 Gew.-% eines Umsetzungsprodukts aus Kolophonium und einem Phenol-Formaldehyd-Kondensationsprodukt.

2. Druckfarben nach Anspruch 1, enthaltend eine Komponente A) mit einer Säurezahl von 20 bis 50 mg KOH/g Harz.

3. Druckfarben nach Anspruch 1, enthaltend zusätzlich Pigmente und für Druckfarben übliche Hilfsmittel.

4. Verfahren zur Herstellung eines beschichteten Substrats nach dem Bogenoffset-Druckverfahren, dadurch gekennzeichnet, daß man eine Druckfarbe gemäß Anspruch 1 verwendet.

## Claims

1. A printing ink based on mineral oil, containing, as a binder, a mixture of
A) from 10 to 50% by weight of an alkyd resin having a hydroxyl number of from 40 to 260 mg of KOH/g resin and an acid number of from 20 to 70 mg of KOH/g resin and obtained by reacting
(a₁) an unsaturated fatty acid of 6 to 20 carbon atoms or a mixture of such acids or triglycerides thereof,
(a₂) one or more polyols of 3 to 8 carbon atoms and
(a₃) adicarboxylicacid of 4 to 20 carbon atoms
to give a reaction product having an acid number of from 10 to 15 mg of KOH/g of substance, and
then reacting said reaction product at from 120 to 180°C with
(a₄) a dicarboxylic anhydride of 4 to 20 carbon atoms,
and
B) from 50 to 90% by weight of a reaction product of rosin and a phenol/formaldehyde condensate.

2. A printing ink as claimed in claim 1, containing a component A) having an acid number of from 20 to 50 mg of KOH/g resin.

3. A printing ink as claimed in claim 1, additionally containing pigments and assistants conventionally used for printing inks.

4. A process for the production of a coated substrate by the sheet offset printing process, wherein a printing ink as claimed in claim 1 is used.

## Revendications

1. Encres d'impression à base d'huiles minérales, contenant en tant que liant un mélange de
A) 10 à 50 % en poids d'une résine alkyde d'indice d'hydroxyle 40 à 260 mg de KOH/g de résine et un indice d'acide de 20 à 70 mg de KOH/g de substance, qui a été obtenue par réaction de
(a1) un acide gras insaturé en C6-C20 ou un mélange de tels acides ou leurs triglycérides,
(a2) un ou plusieurs polyols en C3-C8 et
(a3) un acide dicarboxylique en C4-C20,
avec formation d'un produit de réaction ayant un indice d'acide de 10 à 15 mg de KOH/g de résine,
qu'on fait ensuite réagir à des températures de 120 à 180°C avec
(a4) un anhydride d'acide dicarboxylique en C4-C20,
et
B) 50 à 90 % en poids d'un produit de réaction de la colophane et d'un produit de condensation phénol-formaldéhyde.

2. Encres d'impression selon la revendication 1, contenant un composant A) d'indice d'acide 20 à 50 mg de KOH/g de résine.

3. Encres d'impression selon la revendication 1, contenant en outre des pigments et des produits auxiliaires usuels pour les encres d'impression.

4. Procédé pour la préparation d'un substrat revêtu par la technique d'impression de feuilles en offset, caractérisé par le fait que l'on utilise une encre d'impression selon la revendication 1.
